# FASCICULE DE BREVET EUROPEEN

(11) **EP 0 976 355 B1**
(45) Date de publication et mention de la délivrance du brevet: **30.05.2001**
(21) Numéro de dépôt: 99401916.4
(22) Date de dépôt: 27.07.1999
(51) Int. Cl.: A47J 43/26

(54) **Dispositif de type casse-noix**
Vorrichtung vom Nussknacker-Typ
Device of the nutcracker type

(30) Priorité: 27.07.1998 FR 9809567
(43) Date de publication de la demande: 02.02.2000
(73) Titulaire: Birambeau S.A., 75012 Paris (FR)
(72) Inventeur: Le Bail, Xavier, 95320 Saint Leu La Forêt (FR)
(74) Mandataire: Bruder, Michel

(56) Documents cités:
- US-A- 4 554 737
- US-A- 4 838 155
- US-A- 5 169 076

## Description

La présente invention concerne un casse-noix et plus précisément un casse-noix du type à pince (voir par example US-A-455 4737 tel que décrit dans le préambule de la revendication 1).

On sait que ces casse-noix qui sont particulièrement répandus dans l'état antérieur de la technique, sont constitués de deux branches légèrement incurvées qui sont articulées à l'une de leurs extrémités, leurs extrémités libres formant un bras de levier. Les fruits dont on souhaite briser la coquille, tels que notamment les noix ou les noisettes, sont disposés au voisinage de l'articulation, entre les faces internes des branches et l'on exerce sur leurs extrémités libres un effort tendant à les rapprocher. Afin d'éviter que le fruit saisi entre ces branches ne glisse à l'intérieur de celles-ci, leur face interne comporte des aspérités.

Ces aspérités sont habituellement formées de cannelures successives creusées dans les branches. On a constaté que ces aspérités sont parfois insuffisantes pour assurer un maintien sans glissement du fruit entre les deux branches pivotantes, d'autant qu'après un certain nombre d'utilisations, ces aspérités, sous l'action abrasive exercée par la coquille du fruit, ont tendance à s'émousser. La présente invention a pour but de proposer un moyen permettant d'assurer un maintien efficace du fruit entre les branches du casse-noix.

Un autre inconvénient inhérent à ce type de dispositif casse-noix, est qu'il est difficile à l'utilisateur de doser son effort de façon à briser la coquille du fruit sans détériorer l'intérieur de celui-ci.

Afin d'éviter un tel inconvénient on a disposé, sur les faces internes des branches, des éléments formant butée qui viennent au contact l'un de l'autre lorsque l'on rapproche au maximum les deux branches. On comprend cependant que de telles butées ne peuvent être efficaces que dans la mesure où le maintien du fruit entre les branches est assuré sans glissement lors de l'actionnement, ce qui n'est malheureusement pas le cas des casse-noix de l'état antérieur de la technique.

La présente invention a donc pour but de proposer de tels moyens de maintien des fruits à l'intérieur des branches d'un casse-noix.

Elle a ainsi pour objet un dispositif destiné à briser la coquilles des fruits tels que notamment les noix, du type comprenant deux éléments articulés par une de leurs extrémités respectives autour d'un axe transversal, comportant une zone de préhension voisine de l'axe d'articulation dans laquelle on dispose le fruit dont on souhaite briser la coquille, caractérisé en ce que au moins la face interne de l'un de ces éléments est revêtu, au moins en partie, d'un produit déformable élastique. Un tel produit pourra être notamment constitué d'un élastomère.

Dans un mode de mise en oeuvre de l'invention la face interne dudit élément est creusée d'une gorge dans laquelle est logée, au moins en partie, ledit produit déformable élastique. Une telle disposition favorise le remplacement du produit déformable élastique lorsqu'il est usé.

Préférentiellement, en position de repos du casse-noix, le produit élastique dépasse de la face interne de l'élément, au moins sur une partie de la largeur de celui-ci.

Dans un mode de mise en oeuvre particulièrement intéressant de l'invention les caractéristiques mécaniques du produit déformable élastique et la disposition de celui-ci à l'intérieur de l'évidement seront telles, qu'en position de travail, le produit élastique soit rétracté dans la gorge, de façon que la face interne de l'élément soit en contact avec la coquille du fruit.

Le dispositif casse-noix suivant l'invention pourra comporter des premiers moyens de butée limitant l'écart maximal desdits éléments, et des seconds moyens de butée limitant l'écart minimal de ces dits éléments.

Par ailleurs l'invention permet d'améliorer l'hygiène de ce type de dispositifs, en isolant le métal dont est constitué le casse-noix du fruit lui-même.

On décrira ci-après à titre d'exemples non limitatifs, diverses forme d'exécution de la présente invention, en référence au dessin annexé sur lequel :

La figure 1 est une vue en plan d'un dispositif casse-noix suivant l'invention, en position de travail.

La figure 2 est une vue partielle en plan du dispositif casse-noix représenté sur la figure 1 en position de travail.

La figure 3 est une vue partielle en coupe, en position de mise en place d'une noix, du dispositif casse-noix, suivant la ligne III-III de la figure 1.

La figure 4 est une vue partielle en coupe, en position de travail, du dispositif casse-noix représenté sur les figures 1 et 2 suivant la ligne IV-IV de la figure 2.

La figure 5 est une vue partielle en coupe, en position de repos, d'une des branches d'une variante de mise en oeuvre d'un dispositif casse-noix suivant l'invention.

La figure 6 est une vue partielle en coupe, en position de repos, d'une des branches d'une variante de mise en oeuvre d'un dispositif casse-noix suivant l'invention.

La figure 7 est une vue en plan d'une variante de mise en oeuvre d'un dispositif casse-noix suivant l'invention.

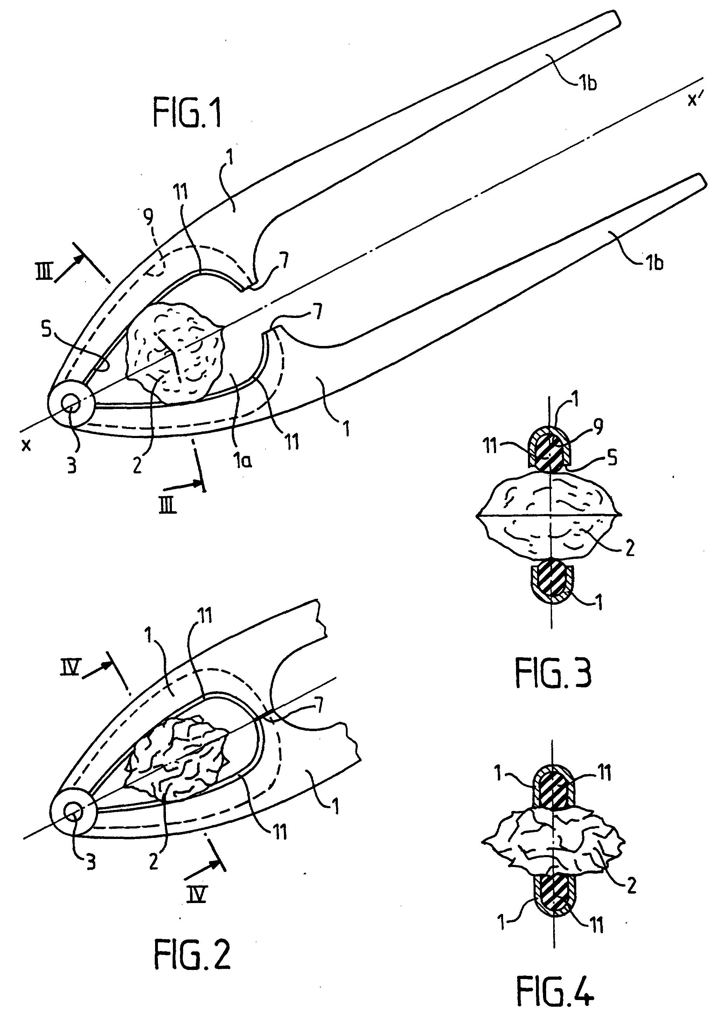

Le dispositif casse-noix représenté sur les figures 1 et 2 est essentiellement constitué de deux branches 1 identiques articulées à l'une de leurs extrémités respectives sur un axe 3. Les branches 1 sont incurvées dans leur partie antérieure pour se prolonger ensuite, de façon sensiblement rectiligne, par deux bras 1b formant levier.

L'axe 3 est pourvu d'éléments de butée, non représentés sur le dessin, qui limitent l'ouverture des branches 1 à une valeur maximale, sensiblement voisine, ainsi que représenté sur la figure 1, d'environ 50°. Les deux faces internes 5 de la partie antérieure des branches 1 forment ainsi une mâchoire la à l'intérieur de laquelle on dispose des fruits tels que des noix ou des noisettes 2 dont on souhaite briser la coquille.

Les deux branches 1 sont également pourvues sur leur face interne de deux butées 7 qui forment des protubérances et qui, en position de fermeture du casse-noix, viennent en contact l'une de l'autre ainsi que représenté sur la figure 2.

Les faces internes 5 de la partie antérieure des branches 1 qui constituent la mâchoire la du dispositif casse-noix suivant l'invention sont creusées d'un évidement longitudinal 9 à l'intérieur duquel est logé un produit élastomère 11 qui, en position de repos du casse-noix, c'est-à-dire lorsqu'aucun fruit 2 n'est soumis à sollicitation, ainsi que représenté sur la figure 3, dépasse de l'évidement 9.

Le produit élastomère 11 qui prend place dans les évidements 9 de chacune des branches 1 est choisi pour ses qualités d'adhérence avec les fruits 2 qu'il est destiné à maintenir.

La mise en oeuvre d'un tel dispositif casse-noix se fait ainsi que décrit ci-après.

On ouvre tout d'abord au maximum les bras 1b puis l'on introduit la noix 2 à l'intérieur de la mâchoire 1a. On positionne la noix de telle façon qu'elle vienne en butée contre les parties antérieures des faces internes 5 constituant la mâchoire la, puis l'on exerce sur les bras 1b un effort tendant à les rapprocher, si bien que sous l'effet de cette force, dont l'effet dépend des valeurs des bras de levier en présence, on écrase la noix 2 jusqu'à ce que les butées 7 solidaires des bras 1b viennent en contact entre elles limitant ainsi la course du déplacement.

Le présent dispositif est particulièrement intéressant en ce que, une fois la noix 2 positionnée dans la mâchoire la, celle-ci conserve sa position sans glissement.

Les qualités d'élasticité de l'élastomère 11 disposé dans l'évidement 9 seront telles qu'elles lui permettront d'assurer son adhérence avec la noix 2 tant que la face interne 5, des branches 1 ne sera pas en contact avec la surface de celle-ci, tout en lui permettant de se déformer suffisamment pour prendre place à l'intérieur de l'évidement 9, de façon que l'effort soit appliqué sur la noix 2 directement par les branches rigides 1.

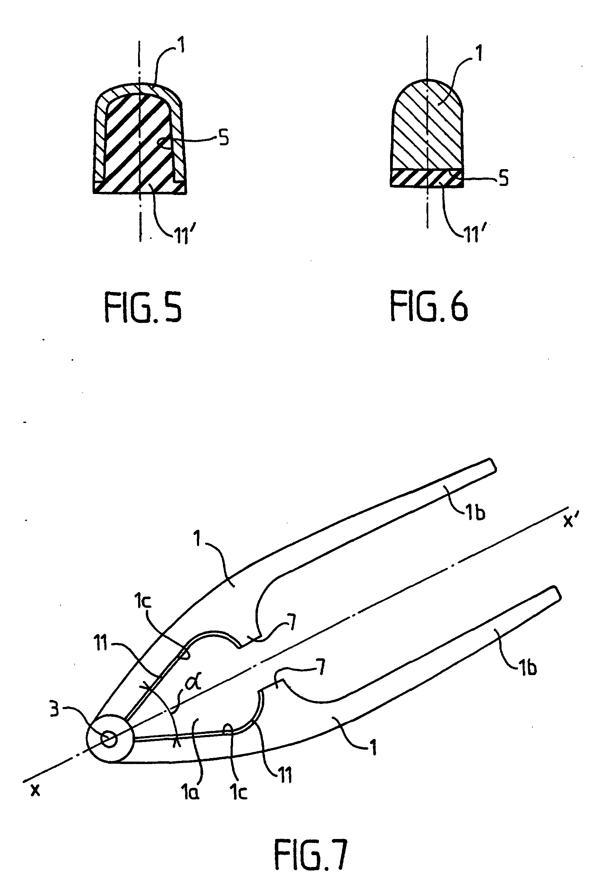

Dans une variante de mise en oeuvre de l'invention, représentée sur la figure 5, on introduit dans l'évidement 9 de la mâchoire la un élastomère 11' de plus grande rigidité, qui s'étend non seulement à l'intérieur de l'évidement 9 mais également à l'extérieur de celui-ci, de façon à recouvrir la face interne 5 des branches 1. Ainsi, dans ce mode de mise en oeuvre de l'invention l'effort transmis par la mâchoire la à la coquille que l'on souhaite briser l'est directement par l'élastomère.

On pourra bien entendu, ainsi que représenté sur la figure 6, fixer le produit déformable élastique 11' directement sur la face interne des branches 1, sans qu'il soit nécessaire de faire appel à un évidement 9. La fixation pourra alors se faire par collage, par rivetage etc.

Dans la variante de mise en oeuvre du casse-noix suivant l'invention qui est représentée sur la figure 7 les flancs 1c de la mâchoire la à l'intérieur de laquelle on introduit les fruits dont on souhaite briser la coquille, sont d'une forme sensiblement rectiligne et forment entre eux un angle α. Par ailleurs ce casse-noix comporte un premier jeu de butée destiné à limiter l'angle α d'ouverture maximale présenté par les deux flancs 1c et un second jeu de butée 7 destiné à limiter l'angle d'ouverture minimale des deux flancs 1c.

Préférentiellement dans un tel mode de mise en oeuvre, la valeur maximale de l'angle d'ouverture α de ces deux flancs sera d'environ 50°, et la valeur minimale sera de l'ordre de 35°. Il a en effet été constaté que, dans ces conditions, lorsque le casse-noix étant en position d'ouverture on mettait le fruit en butée contre les flancs lc, la fermeture du casse-noix en position minimale d'ouverture avait pour effet de briser les coquilles du fruit introduit sans en détruire l'intérieur.

De façon intéressante le dispositif pourra être muni de moyens élastiques qui, en position de repos, disposeront les branches 1 en position d'ouverture maximale.

## Revendications

1. Dispositif destiné à briser la coquilles des fruits tels que notamment les noix, du type comprenant deux éléments (1) articulés par une de leurs extrémités respectives autour d'un axe (3) transversal, comportant une zone de préhension (la) du fruit voisine de l'axe d'articulation (3) dans laquelle on dispose le fruit (2) dont on souhaite briser la coquille, caractérisé en ce que au moins la face interne (5) de l'un de ces éléments est revêtue, au moins en partie, d'un produit déformable élastique (11,11').

2. Dispositif suivant la revendication 1 caractérisé en ce que la face interne (5) dudit élément (1) est creusée d'un évidement (9) dans lequel est logé, au moins en partie, ledit produit déformable élastique (11).

3. Dispositif suivant la revendication 2 caractérisé en ce que, en position de repos, le produit élastique (11) dépasse de la face interne (5) de l'élément (1) au moins sur une partie de la largeur de celui-ci.

4. Dispositif suivant la revendication 3 caractérisé en ce que les caractéristiques mécaniques du produit déformable élastique (11) et la disposition de celui-ci à l'intérieur de l'évidement (9) sont telles, qu'en position de travail, il soit rétracté dans l'évidement (9) de façon que la face interne (5) de l'élément (1) soit en contact avec la coquille du fruit.

5. Dispositif suivant l'une des revendications 1 à 4 caractérisé en ce que ledit produit (11,11') est un élastomère.

6. Dispositif suivant l'une quelconque des revendications précédentes caractérisé en ce qu'il comporte:
- des premiers moyens de butée limitant l'écart angulaire (α) maximal desdits éléments (1),
- des seconds moyens de butée (7) limitant l'écart angulaire (α) minimal de ces dits éléments (1).

7. Dispositif suivant la revendication 6 caractérisé en ce que les flancs internes (1c) de la zone de préhension (la) du fruit sont sensiblement rectilignes.

8. Dispositif suivant la revendication 7 caractérisé en ce que l'écart angulaire maximal entre les deux flancs (1c) est de l'ordre de 50°.

9. Dispositif suivant la revendication 7 ou 8 caractérisé en ce que l'écart angulaire minimal entre les deux flancs (lc) est de l'ordre de 35°.

10. Dispositif suivant la revendication 6 caractérisé en ce qu'il comporte des moyens élastiques qui, en position de repos, mettent les deux éléments (1) en position d'ouverture maximale.

## Claims

1. Device for cracking the shells of fruit, such as in particular walnuts, of the type comprising two elements (1) pivoting, by one of their respective ends, about a transverse pin (3), comprising a fruit-gripping area (la) adjacent to the pivot axis (3) in which the fruit (2), whose shell it is desired to crack, is placed, characterized in that at least the inner face (5) of one of these elements is covered, at least in part, with an elastically deformable product (11, 11').

2. Device according to Claim 1, characterized in that the inner face (5) of said element (1) has a recess (9) hollowed out therein, in which said elastically deformable product (11) is housed at least in part.

3. Device according to Claim 2, characterized in that, in rest position, the elastic product (11) projects beyond the inner face (5) of the element (1) at least over a part of the width thereof.

4. Device according to Claim 3, characterized in that the mechanical characteristics of the elastically deformable product (11) and the arrangement thereof inside the recess (9) are such that, in work position, it is retracted in the hollow (9) so that the inner face (5) of the element (1) is in contact with the shell of the fruit.

5. Device according to one of Claims 1 to 4, characterized in that said product (11, 11') is an elastomer.

6. Device according to any one of the preceding Claims, characterized in that it comprises:
- first stop means limiting the maximum angle of opening (α) of said elements (1),
- second stop means (7) limiting the minimum angle of opening (α) of said elements (1).

7. Device according to Claim 6, characterized in that the inner sides (1 c) of the fruit-gripping area (1a) are substantially rectilinear.

8. Device according to Claim 7, characterized in that the maximum angle of opening between the two sides (1c) is of the order of 50°.

9. Device according to Claim 7 or 8, characterized in that the minimum angle of opening between the two sides (1c) is of the order of 35°.

10. Device according to Claim 6, characterized in that it comprises elastic means which, in rest position, place the two elements (1) in position of maximum opening.

## Patentansprüche

1. Vorrichtung, dazu bestimmt, die Schale von Früchten wie insbesondere Nüsse zu brechen, vom Typ mit zwei Elementen (1), welche durch eines ihrer Enden jeweils um eine Querachse (3) herum gelenkig angebracht sind, welche Vorrichtung eine Zone (la) zum Greifen der Frucht aufweist, die der Drehachse (3) benachbart ist, in welche man die Frucht (2) anordnet, deren Schale gebrochen werden soll, dadurch gekennzeichnet, dass mindestens die Innenseite (5) eines dieser Elemente mindestens teilweise mit einem verformbaren elastischen Produkt (11, 11') umhüllt ist.

2. Vorrichtung nach Anspruch 1,
dadurch gekennzeichnet, dass die Innenseite (5) des Elements (1) von einer Aussparung (9) ausgehöhlt ist, in welcher mindestens teilweise das verformbare elastische Produkt (11) untergebracht ist.

3. Vorrichtung nach Anspruch 2,
dadurch gekennzeichnet, dass in Ruhestellung das elastische Produkt (11) von der Innenseite (5) des Elements (1) mindestens an einem Abschnitt von dessen Breite übersteht.

4. Vorrichtung nach Anspruch 3,
dadurch gekennzeichnet, dass die mechanischen Eigenschaften des verformbaren elastischen Produkts (11) und seine Anordnung im Innern der Aussparung (9) derart sind, dass es in Arbeitsstellung in der Aussparung (9) eingezogen ist, so dass die Innenseite (5) des Elements (1) mit der Schale der Frucht in Kontakt ist.

5. Vorrichtung nach einem der Ansprüche 1 bis 4,
dadurch gekennzeichnet, dass das Produkt (11, 11') ein Elastomer ist.

6. Vorrichtung nach einem der vorhergehenden Ansprüche,
dadurch gekennzeichnet, dass sie aufweist:
- erste Anschlagmittel, die den maximalen Winkelabstand bzw. Phasenwinkel (α) der Elemente (1) begrenzen,
- zweite Anschlagmittel (7), die den minimalen Winkelabstand (α) dieser Elemente (1) begrenzen.

7. Vorrichtung nach Anspruch 6,
dadurch gekennzeichnet, dass die Innenflanken (lc) der Zone (1a) zum Greifen der Frucht im wesentlichen geradlinig sind.

8. Vorrichtung nach Anspruch 7,
dadurch gekennzeichnet, dass der maximale Winkelabstand zwischen den beiden Flanken (1c) eine Größenordnung von 50° hat.

9. Vorrichtung nach Anspruch 7 oder 8,
dadurch gekennzeichnet, dass der minimale Winkelabstand zwischen den beiden Flanken (lc) eine Größenordnung von 35° hat.

10. Vorrichtung nach Anspruch 6,
dadurch gekennzeichnet, dass sie elastische Mittel aufweist, die in Ruhestellung die beiden Elemente (1) in maximale Öffnungsstellung bringen.
